# EUROPEAN PATENT APPLICATION

(11) **EP 2 787 607 A2**
(43) Date of publication of application: **08.10.2014**
(21) Application number: 14163218.2
(22) Date of filing: 02.04.2014
(51) Int. Cl.: H02K 3/52

(54) **Electric machine rotor**

(30) Priority: 04.04.2013 US 201313856718
(71) Applicant: Hamilton Sundstrand Corporation, Windsor Locks, CT 06096-1010 (US)
(72) Inventor: Hochstetler, Derek R., Loves Park, IL 61111 (US); Welch, Timothy R., Roscoe, IL 61073 (US); Abels, Jan Henry, Rockford, IL 61107 (US)
(74) Representative: Bridge, Kerry Ann

(57) **Abstract**

A wedge 32 for a rotor 12 of an electric machine includes a circumferentially outer surface 34 defining a radial extent of the wedge 32 extending from a first axial end 42 of the wedge to a second axial end 44 of the wedge. A plurality of circumferentially-extending grooves 46 extend radially inwardly from the circumferentially outer surface to a groove depth. The plurality of grooves 46 are axially spaced along a wedge length between the first axial end 42 and the second axial end 44. The axial spacing between the grooves is greater than an axial width of each groove. An intermediate surface 70 between adjacent grooves has a same radial position as a first end surface between the first axial end and a first groove closest to the first axial end. Two planar side surfaces 38 circumferentially bound the circumferentially outer surface and extend radially inwardly from the cicumferential outer surface.

## Description

### BACKGROUND

The subject matter disclosed herein generally relates to electric machines. More specifically, the disclosure relates to rotor wedges for electric machines.

Electric machines, such as generators, typical include a rotor assembly having a plurality of field coils or windings. The rotor is at least partially surrounded by a stator including a plurality of stator windings. The rotor is rotated about a rotor axis by, for example, a turbine connected to a rotor shaft. When rotated, the rotor generates a current in the stator windings.

Due to the high centrifugal forces acting on the field coils during operation of the generator, rotor wedges are used to retain and support the field coils at the rotor. The rotor wedges, in turn, are typically retained and supported by the rotor core, often formed from a stack of laminations, leading to high stress levels in the laminations. The high stress levels in support of the rotor wedges typically drive lamination material selection and geometric configuration, resulting in a compromise of magnetic properties of the rotor. Further, the typical wedge induces high levels of eddy current losses in the rotor and reduces overall generator efficiency.

### BRIEF DESCRIPTION

According to one embodiment, a wedge for a rotor of an electric machine includes a circumferentially outer surface defining a radial extent of the wedge extending from a first axial end of the wedge to a second axial end of the wedge. A plurality of circumferentially-extending grooves extend radially inwardly from the circumferentially outer surface to a groove depth. The plurality of grooves are axially spaced along a wedge length between the first axial end and the second axial end. The axial spacing between the grooves is greater than an axial width of each groove. An intermediate surface between adjacent grooves has a same radial position as a first end surface between the first axial end and a first groove closest to the first axial end. Two planar side surfaces circumferentially bound the circumferentially outer surface and extend radially inwardly from the cicumferential outer surface.

According to another embodiment, a rotor assembly for a generator includes a plurality of field coils and a rotor core centered about a rotor axis and supportive of the plurality of field coils. The rotor assembly further inclues a plurality of rotor wedges. Each rotor wedge is assembled to the rotor core and abuts a field coil of the plurality of field coils to support and retain the field coil at the rotor core. Each rotor wedge includes a circumferentially outer surface defining a radial extent of the wedge extending from a first axial end of the wedge to a second axial end of the wedge. A plurality of circumferentially-extending grooves extend radially inwardly from the circumferentially outer surface to a groove depth. The plurality of grooves are axially spaced along a wedge length between the first axial end and the second axial end. The axial spacing between the grooves is greater than an axial width of each groove. An intermediate surface between adjacent grooves has a same radial position as a first end surface between the first axial end and a first groove closest to the first axial end. Two planar side surfaces circumferentially bound the circumferentially outer surface and extend radially inwardly from the cicumferential outer surface.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a cross-sectional view of an embodiment of an electric mahine;
FIG. 2 is a cross-sectional view of an embodiment of a rotor for an electric machine;
FIG. 3 is a perspective view of an embodiment of a rotor wedge;
FIG. 4 is a cross-sectional view of an embodiment of a rotor wedge; and
FIG. 5 is another cross-sectional view of an embodiment of a rotor wedge.

The detailed description explains embodiments of the invention, together with advantages and features, by way of example with reference to the drawings.

### DETAILED DESCRIPTION OF THE INVENTION

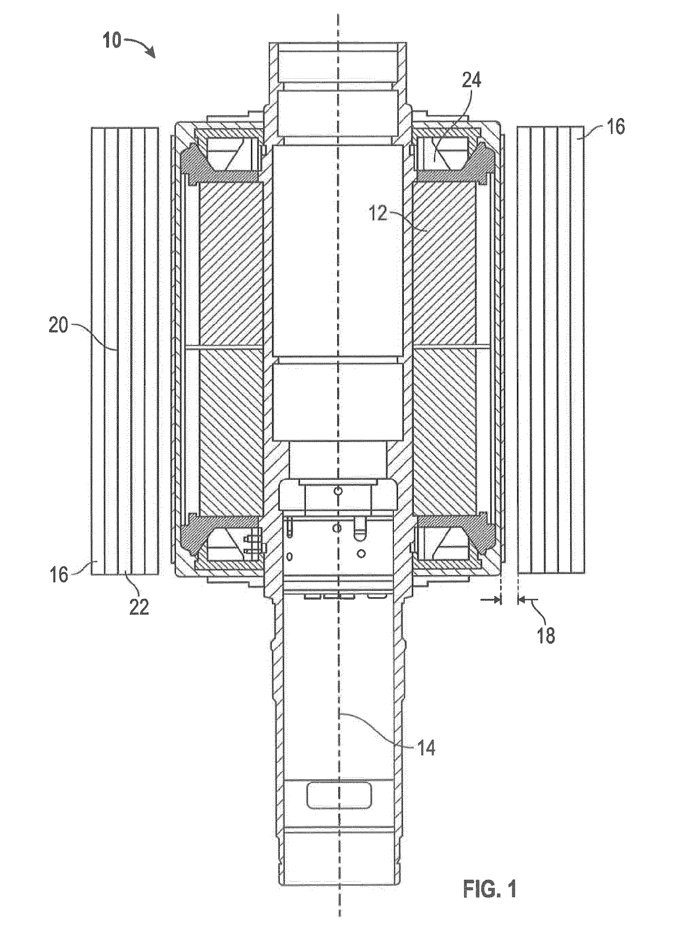

Shown in FIG. 1 is an embodiment of an electric machine, in this case a generator 10. In some embodiments, the generator 10 is a four-pole rotor generator rated at 120kVA. The generator 10 includes a rotor 12 located at a rotor axis 14 and rotatable thereabout. A stator 16 is located radially outboard of the rotor 12 and at least partially surrounds the rotor 12, defining an air gap 18 between the rotor 12 and the stator 16. The stator 16 includes a plurality of stator windings 20 arranged at a stator core 22. The stator windings 20 are interactive with a plurality of field coils 24 arranged at the rotor 12, such that when the rotor 12 is rotated about the rotor axis 14 an electrical current is generated in the stator windings 20.

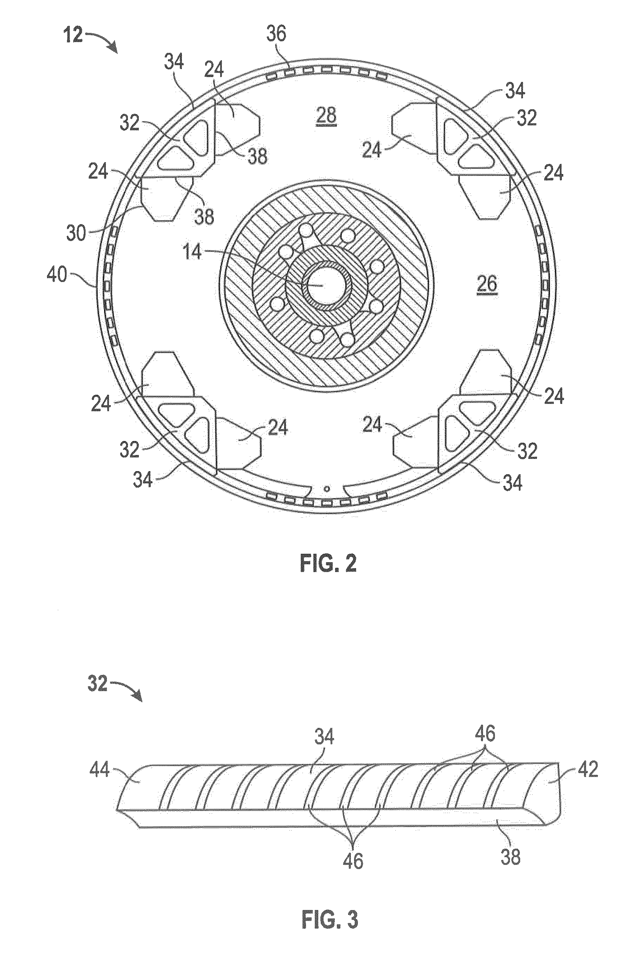

Referring now to FIG. 2, a cross-sectional view of an embodiment of the rotor 12 is shown. The rotor 12 includes a rotor core 26, in some embodiments formed from a plurality of rotor laminations 28 stacked along the rotor axis 14. The field coils 24 are arranged in field coil openings 30 in the rotor core 26, with wedges 32 located adjacent to the field coils 24 to position and support the field coils 24. The wedge 32 has a wedge outer surface 34 having a substantially same radial position as an outer surface 36 of the rotor core 26. Side surfaces 38 of the wedge 32 extend inwardly from the wedge outer surface 34 and are generally planar. The side surfaces 38 are oriented to converge as radial distance from the rotor axis 14 decreases. The side surfaces 38 abut the field coils 24. The wedges 32, and thus the field coils 24, are retained in the rotor core 26 by rotor sleeve 40 surrounding the rotor core 26 and the wedges 32. By utilizing the rotor sleeve 40 to radially retain the wedges 32, rather than the utilizing the rotor core 26 for this purpose, the configuration of the rotor core 26 is not limited by the need to retain the wedges 32, as in the typical rotor configuration.

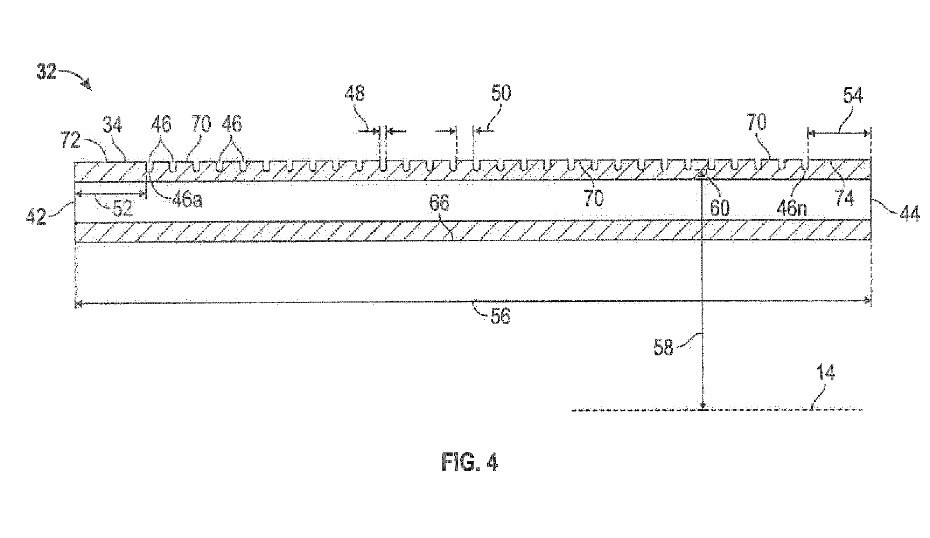

Referring now to FIG. 3, an embodiment of the wedge 32 is shown in greater detail. In some embodiments, the wedge 32 is formed from a metallic material such as an aluminum or aluminum alloy. The wedge 32 includes a first end 42 and a second end 44. The wedge outer surface 34 extends axially from the first end 42 to the seond end 44. A plurality of grooves 46 are arranged in the wedge outer surface 34. The grooves 46 extend substantially circumferentially and are spaced axially from each other. The grooves 46 are utilized to reduce eddy current losses and to improve efficiency of the generator 10. Referring to FIG. 4, the grooves 46 have a groove width 48 and have a groove spacing 50 between adjacent grooves 46. In some emodiments, the groove width is .060", and the groove spacing is .091". A ratio of groove width 48 to groove spacing 50 is beween 0.6 and 0.7. In some emodiments a first groove distance 52 from the first end 42 to a first groove 46a closest to the first end 42 is 0.575", while a second groove distance 54 from the second end 44 to the last groove 46n closest to the second end 44 is not equal to the first groove distance 52, or about 0.496" in a wedge 32 having a wedge length 56 of 6.48". In some embodiments, a ratio of the second groove distance 54 to the first groove distance 52 is not greater than 0.87. A depth of the groove 46 may be defined by a radial distance 58 of groove bottom 60 from the rotor axis 14. In some embodiments, the radial distance 58 is 2.560" in a rotor 12 with a wedge outer surface 34 having a radius of 2.640". In other embodiments, the groove depth defined as a distance of the groove bottom 60 from the wedge outer surface is 0.080". Thus, in some embodiments, a ratio of groove depth to wedge outer surface 34 radius is between 0.02 and 0.04. In some embodiments, a ratio of the radial distance 58 to the wedge outer surface 34 radius is between 0.95 and 0.97. An intermediate surface 70 between consecutive grooves 46 has a same radial position as a first end surface 72 extending from the first end 42 to the first groove 46a, and the same radial position as a second end surface 74 extending from the second end 44 to the last groove 46n.

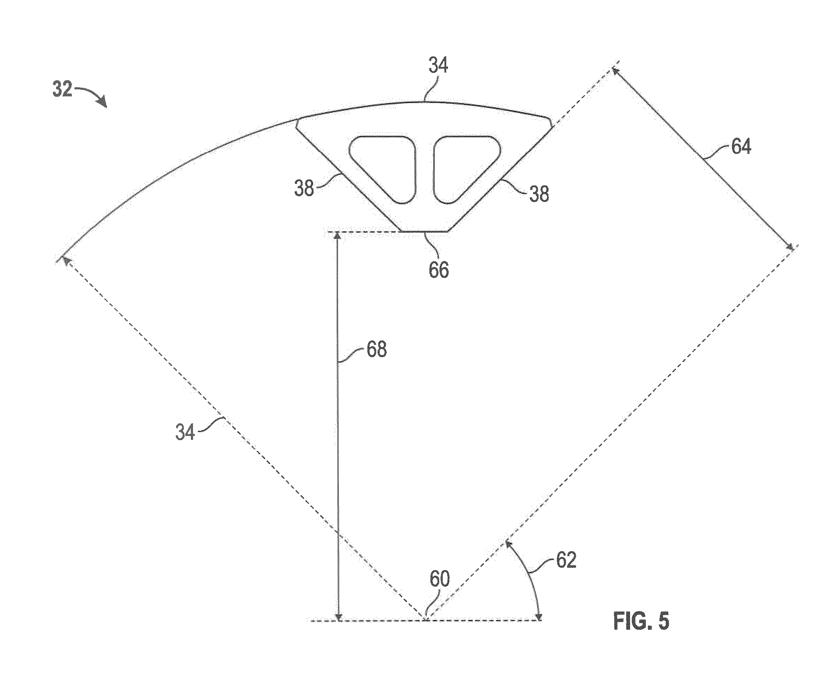

As shown in FIG. 5, the wedge 32 is generally triangular in shape, and is centered about generation point 60 corresponding with the rotor axis 14. A position of each side surface 38 is defined from a horizontal axis through the genertation point 60. A wedge angle 62 is defined from the horizontal axis with the side surface 38 set parallel to the wedge angle 62 at a wedge distance 64 therefrom. In some embodiments, the wedge angle 62 is 45 degrees and the wedge distance 64 is 1.325". In some embodiments a ratio of wedge distance 64 to wedge outer surface 34 radius is between 0.45 and 0.55. A wedge base 66 is truncated at a base distance 68 from the generation point 60, which in some embodiments is 1.98". A ratio of base distance 68 to wedge outer surface 34 radius is between 0.7 and 0.8.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while the various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A wedge (32) for a rotor (12) of an electric machine comprising:
a circumferentially outer surface (34) defining a radial extent of the wedge extending from a first axial end (42) of the wedge to a second axial end (44) of the wedge;
a plurality of circumferentially-extending grooves (46) extending radially inwardly from the circumferentially outer surface to a groove depth, the plurality of grooves (46) axially-spaced along a wedge length between the first axial end (42) and the second axial end (44), the axial spacing between the grooves is greater than an axial width of each groove, an intermediate surface (70) between adjacent grooves having a same radial position as a first end surface between the first axial end and a first groove closest to the first axial end; and
two planar side surfaces (38) circumferentialy bounding the circumferentially outer surface extending radially inwardly from the cicumferential outer surface (34).

2. The wedge of Claim 1, wherein a ratio of wedge axial width to wedge axial spacing is between 0.6 and 0.7.

3. The wedge of Claim 1 or 2, further comprising a circumferntial inner surface extending between the two side surfaces (38) and defining a radially inward extent of the wedge (32).

4. The wedge of Claim 3, wherein the circumferential inner surface is planar.

5. The wedge of Claim 3, wherein a ratio of an outer radius of curvature of the circumferentially outer surface (34) to a normal distance from a center of curvature of the wedge to the cirumferential inner surface is between 0.7 and 0.8.

6. The wedge of any of Claims 1-5, further comprising a second end surface extending form a second axial end to a last groove closest to the seond axial end, having a same radial position as the intermediate position.

7. A rotor assembly for a generator comprising:
a plurality of field coils (24);
a rotor core (26) centered about a rotor axis and supportive of the plurality of field coils;
a plurality of said rotor wedges (32) of any preceding claim, each rotor wedge (32) assembled to the rotor core and abutting a field coil of the plurality of field coils to support and retain the field coil at the rotor core.

8. The rotor assembly of Claim 7, wherein a ratio of wedge axial width to wedge axial spacing is between 0.6 and 0.7.

9. The rotor assembly of Claim 7 or 8, wherein the wedge further includes a circumferential inner surface extending between the two side surfaces and defining a radially inward extent of the wedge.

10. The rotor assembly of Claim 9, wherein the circumferential inner surface is planar.

11. The rotor assembly of Claim 9, wherein a ratio of an outer radius of curvature of the circumferentially outer surface to a normal distance from the rotor axis to the cirumferential inner surface is between 0.7 and 0.8.

12. The rotor assembly of any of Claims 7-11, wherein the wedge further includes a second end surface extending form a second axial end to a last groove closest to the seond axial end, having a same radial position as the intermediate position.

13. The rotor assembly of Claim 12, wherein a ratio of a first end surface axial length to a second end surface axial length is not greater than 0.87.

14. The rotor assembly of any of Claims 7-13, wherein the rotor core comprises a plurality of rotor laminations stacked along the rotor axis.

15. The rotor assembly of any of Claims 7-14, further comprising a rotor sleeve (40) surrounding the rotor core (26) and the plurality of rotor wedges to retain the rotor wedges at the rotor core (26).
